# EUROPEAN PATENT APPLICATION

(11) **EP 4 604 276 A1**
(43) Date of publication of application: **20.08.2025**
(21) Application number: 24158383.0
(22) Date of filing: 19.02.2024
(51) Int. Cl.: H01M 50/103, H01M 50/209, H01M 50/325

(54) **BATTERY CELL FOR A TRACTION BATTERY, BATTERY CELL STACK FOR AN ELECTRIC VEHICLE, ELECTRIC VEHICLE, AND METHODS FOR MANUFACTURING A BATTERY CELL AND A BATTERY CELL STACK**

(71) Applicant: Volvo Car Corporation, 405 31 Göteborg (SE)
(72) Inventor: WERBERG, Leopold, 40531 Göteborg (SE)
(74) Representative: Maiwald GmbH

(57) **Abstract**

There is provided a battery cell (130) for a traction battery of an electric vehicle. The battery cell (130) comprises a battery cell body having at least a first side (510) and a second side (520), wherein the second side (520) is arranged adjacent to the first side (510). A degassing valve is arranged on the first side (510) of the battery cell body. Moreover, a cover element (300) covers at least a portion of the degassing valve and extends onto the second side (520). Furthermore, a battery cell stack, a battery system, and an electric vehicle are described. Additionally, a method for manufacturing a battery cell (130) and a method for manufacturing a battery cell stack are presented.

## Description

### TECHNICAL FIELD

The present disclosure relates to a battery cell for a traction battery of an electric vehicle.

The present disclosure also relates to a battery cell stack comprising such battery cell, to a battery system comprising such battery cell stack and to an electric vehicle comprising such battery cell stack and/or such battery system.

Still further, the present disclosure relates to a method for manufacturing a battery cell and to a method for manufacturing a battery cell stack.

### BACKGROUND ART

Battery electric vehicles or hybrid electric vehicles may comprise, in a battery system, a plurality of battery cells arranged in one or more battery cell stacks. The battery ell system is configured to provide electric energy for driving the vehicle. The battery system may alternatively be called a battery pack or traction battery pack. It goes without saying that battery systems need to be operated in a safe manner. To this end, known battery cells are equipped with a so-called degassing valve allowing hot gases to leave the battery cell in case of a thermal event occurring within the battery cell.

### SUMMARY

Therefore, it is an object of the present disclosure to further improve battery cells and battery systems comprising such battery cells. The improvement shall in particular relate to the resistance of a battery system against thermal events.

The problem is at least partially solved or alleviated by the subject matter of the independent claims of the present disclosure, wherein further examples are incorporated in the dependent claims.

According to a first aspect, there is provided a battery cell for a traction battery of an electric vehicle. The battery cell comprises a battery cell body having at least a first side and a second side, wherein the second side is arranged adjacent to the first side. A degassing valve is arranged on the first side of the battery cell body. Moreover, a cover element covers at least a portion of the degassing valve and extends onto the second side. The cover element protects the associated battery cell from effects of a thermal event occurring in another battery cell of the same battery system and/or the same cell stack. At the same time, the cover element does not hinder the functionality of the degassing valve which is covered by the cover element. Thus, in simplified words, if the battery cell having the cover element undergoes a thermal event, the degassing valve opens in order to allow hot gases to leave the battery cell. The cover element is eliminated, e.g. pushed back or deformed, by these hot gases. However, if a thermal event occurs in another battery cell, the cover element protects the associated battery cell and especially the degassing valve it covers from undesired influences of the hot gases produced by the other battery cell. The fact that the cover element extends onto the second side ensures reliable attachment of the cover element to the battery cell body. This is due to several effects. First, the portions of the cover element extending onto the second side may be used for an attachment of any kind to the battery cell body. Thus, the cover element may be reliably and flexibly attached to the battery cell body. Second, the portion of the cover element extending onto the second side may be clamped between the battery cell comprising the cover element and a neighboring battery cell. This further enhances the attachment. Altogether, operational safety of the battery cell is enhanced.

It shall be noted that the battery cell is according to the present disclosure may generally be of any shape. In an example, the battery cell is a so-called prismatic battery cell, i.e. the battery cell has a generally cuboid-shape. In another example, the battery cell has a cylindrical shape. More generally speaking, the battery cell may have any shape, which may allow for an arrangement of several battery cells adjacent to one another in a battery cell stack.

According to an example, the battery cell body may further have a third side, wherein the second side and the third side are arranged adjacent to the first side at opposite edges of the first side. The cover element additionally extends onto the third side. In this configuration, the reliability of the attachment of the cover element to the battery cell body is further enhanced since the portion of the cover element extending onto the third side may be used for attaching the cover element to the battery cell body. Moreover, the portion of the cover element extending onto the third side may be clamped between the battery cell comprising the cover element and a neighboring battery cell. This further enhances the attachment.

In a situation in which the battery cell comprising the cover element is arranged between two further battery cells, a compression force may be applied on the battery cell comprising the cover element. Thus, the cover element may be compressed by the two neighboring battery cells, wherein one neighboring battery cell is arranged adjacent to the second side and one neighboring battery cell is arranged adjacent to the third side of the battery cell comprising the cover element.

It shall be noted that in case the cover element extends only onto one side of the battery cell, protection provided by the cover element against gases being discharged by another battery cell may be higher if these gases originate from a battery cell arranged on the same side on which the cover element extends onto the second side or third side of the battery cell. In such a situation, the gases may push the cover element onto the degassing valve.

According to an example, the cover element may be connected to at least one of the first side, the second side and the third side via an adhesive. Consequently, the cover element is reliably attached to the battery cell body. This applies to a situation in which the battery cell is used in an assembly process, e.g. when assembling a battery system or battery cell stack comprising the battery cell. According to an example, the adhesive may be configured to reliably attach the cover element to the battery cell body during assembly, but not above a temperature level common for thermal events or over a lifetime of the battery cell. This enhances the choice of suitable adhesives and facilitates the attachment of the cover element to the battery cell body. It is noted that during a thermal event of a neighboring battery cell, the cover element may be held in place due to the fact that at least a portion thereof extends onto the second side and/or the third side of the battery cell body and, therefore, is clamped by neighboring battery cells. The same applies during use of the battery cell without a thermal event, i.e. over the lifetime of the battery cell., In other words, the mechanical clamping force provided by a compressing the battery cell in the associated battery cell stack is used to hold the cover element in position throughout the life of the battery cell stack and throughout a duration of a thermal event. Since this compression is already used in the battery cell stack to ensure e.g. cell durability, this compression may be used to fulfil both tasks.

According to an example, the cover element may extend onto at least one of the second side and the third side for at least 3mm and/or for at most 30mm. In doing so, a minimum extension of 3mm onto the second side and/or onto the third side may allow that a sufficient amount of the cover element is provided between neighboring battery cells so that the compression force may be applied on a sufficiently large area of the cover element. Moreover, this configuration allows to reliably attach the cover element to the battery cell body, e.g. using adhesive.

According to an example, in a direction perpendicular to the direction in which the cover element extends onto the second side, a width of the cover element may at least equal a maximum width of the degassing valve in this direction. This means that the width of the cover element equals the maximum width of the degassing valve or the width of the cover element is larger than the maximum width of the degassing valve. Consequently, the degassing valve is reliably covered while still comparatively little material is necessary for the cover element.

According to an example, the cover element may comprise at least one of fiberglass, mica material and silicon rubber. All of these materials are heat-resistant to an extent that allows to reliably protect the covered degassing valve from the effects that hot gases resulting from a thermal event in another battery cell may have.

According to an example, the cover element may have a thickness in a range from 0.05mm to 1.0mm. This thickness has proven to be sufficient to generate the desired protection effect. At the same time this thickness is small enough to be able to clamp a portion of the cover element between neighboring battery cells without negatively affecting these, e.g. by generating force peaks in zone where the cover element contacts the battery cell body.

According to an example, the cover element may be strip-shaped. Hence, application of the cover element is facilitated since strip-shaped cover element may be easily and reliably handled during a manufacturing process. At the same time, a strip-shape is a comparatively simple form that allows for efficient production of cover elements.

It shall be noted that using a cover element, e.g. in the form of a thin layer of material, for example a fiberglass (like fiberglass tape), mica material and/or silicon rubber, directly covering the battery cell's degassing valve provides a reliable way of protecting the battery cell's degassing valves from gases resulting from a thermal event in a neighboring battery cell. Such thin layer may act as a relatively inexpensive and simple shield against hot, pressurized gases that are known to melt aluminum-made degassing valves of battery cells and that have the potential to cause a propagation of the thermal event in other battery cells initially not affected by the thermal event.

According to an example, a mechanical connection interface may be arranged on the first side. The mechanical connection interface may be configured to structurally connect the battery cell with a structural element of the vehicle. This means that the battery cell may be used as a structural component of the vehicle. Thus, the battery cell may support loads occurring during operation of the vehicle. Such a structural connection may offer the possibility to achieve an additional mechanical stability of the vehicle provided by the battery cell. Remaining structural components of the vehicle may be adapted to this effect such that overall a weight of the vehicle may be reduced while keeping an overall mechanical stability.

According to a second aspect, there is provided a battery cell stack for an electric vehicle. The battery cell stack comprises a plurality of battery cells arranged adjacent to one another along an arrangement direction. At least one battery cell among the plurality of battery cells is a battery cell according to the first aspect. A portion of the cover element extending onto the second side of the battery cell according to the first aspect contacts a neighboring battery cell. Additionally or alternatively, a portion of the cover element extending onto the third side of the battery cell according to the first aspect contacts a neighboring battery cell. In other words, the portion of the cover element extending onto the second side and/or the portion of the cover element extending onto the third side may be clamped between the battery cell comprising the cover element and an adjacent battery cell. Thus, the above-outlined advantages for a single battery cell may thus be applied and hold true for the battery cell stack.

According to an example, the battery cells of the battery cell stack may be compressed along the arrangement direction. Thus, a compression force is applied on the portions of the cover element contacting the neighboring battery cell, i.e. on the portion of the cover element extending onto the second side and/or the portion of the cover element extending onto the third side.

According to a third aspect, there is provided a battery system for an electric vehicle, comprising a battery cell stack according to the second aspect. Thus, at least some of the battery cells of the battery system are protected from effects of a thermal event occurring in another battery cell of the same battery system and/or the same cell stack. This protection is provided by the cover element. At the same time, the cover element does not hinder the functionality of the degassing valve which is covered by the cover element. Thus, in simplified words, if the battery cell having the cover element undergoes a thermal event, the degassing valve opens in order to allow hot gases to leave the battery cell. The cover element is eliminated, e.g. pushed back or deformed, by these hot gases. However, if a thermal event occurs in another battery cell, the cover element protects the associated battery cell and especially the degassing valve it covers from undesired influences of the hot gases produced by the other battery cell. The fact that the cover element extends onto the second side ensures reliable attachment of the cover element to the battery cell body. Thus, the battery system fulfils particularly high standards in respect of safety and reliability.

According to a fourth aspect, there is provided an electric vehicle comprising a battery cell stack according to the second aspect and/or a battery system according to the third system. Due to the fact that the battery cell stack and/or the battery system fulfils particularly high standards in respect of safety and reliability, the same applies to the electric vehicle.

According to an example, the battery cell stack and/or the battery system may be a structural component of the vehicle. This means that the battery cell stack and/or the battery system may be used as a structural component of the vehicle. Thus, the battery cell stack and/or the battery system may support loads occurring during operation of the vehicle. This offers the possibility to achieve an additional mechanical stability of the vehicle provided by the battery cell stack and/or the battery system. Remaining structural components of the vehicle may be adapted to this effect such that overall a weight of the vehicle may be reduced while keeping an overall mechanical stability.

According to a fifth aspect, there is provided a method for manufacturing a battery cell, wherein the battery cell comprises a battery cell body having at least a first side and a second side, wherein the second side is arranged adjacent to the first side, and a degassing valve arranged on the first side of the battery cell body. The method comprises providing the battery cell body, and arranging a cover element on the cell body such that the cover element covers at least a portion of the degassing valve and extends onto the second side. Thus, using this method, a battery cell may be manufactured which is protected from effects of a thermal event occurring in another battery cell of the same battery system and/or the same cell stack.

According to a sixth aspect, there is provided a method for manufacturing a battery cell stack comprising a plurality of battery cells arranged adjacent to one another along an arrangement direction, the method comprising providing a plurality of battery cells, wherein at least one battery cell according to the first aspect is amongst the plurality of battery cells; and arranging the plurality of battery cells adjacent to one another along the arrangement direction such that a portion of the cover element extending onto the second side of the battery cell according to any of the first aspect contacts a neighboring battery cell and/or such that a portion of the cover element extending onto the third side of the battery cell according to the first aspect contacts a neighboring battery cell. Thus, using this method, a battery cell stack may be manufactured which comprises battery cells that are protected from effects of a thermal event occurring in another battery cell of the same battery system and/or the same cell stack.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows an electric vehicle according to the present disclosure comprising a battery system according to the present disclosure having a battery cell stack according to the present disclosure and a plurality of battery cells according to the present disclosure;
- Figure 2: shows a portion of two battery cell stacks of the vehicle of Figure 1, wherein cover elements are not shown;
- Figure 3: shows another example of a battery cell stack;
- Figure 4: shows a further example of a battery cell stack, wherein cover elements are only shown for some battery cells;
- Figure 5: shows an example of a battery cell, wherein the cover element is not yet attached to a battery cell body;
- Figure 6: shows an example of a battery cell, wherein the cover element is partially attached to the battery cell body;
- Figure 7: shows an example of the battery cell, wherein the cover element is fully attached to the battery cell body; and
- Figure 8: shows the cover element of the battery cell of Figures 5 to 7 in a separate representation.

### DETAILED DESCRIPTION

The Figures are merely schematic representations and serve only to illustrate examples of the disclosure. Identical or equivalent elements are in principle provided with the same reference signs.

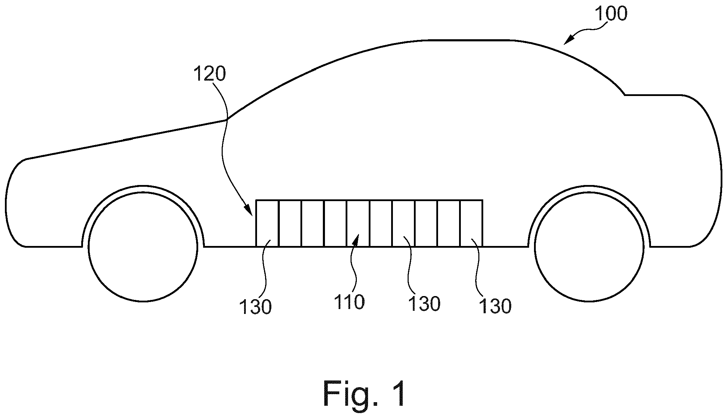

Figure 1 shows an electric vehicle 100.

The electric vehicle 100 comprises a battery system 110 which in the present example is a traction battery. Moreover, the battery cell system 110 is a structural component of the vehicle 100.

The battery system 110 comprises a plurality of battery cell stacks 120 which are arranged in a battery housing. In the schematic representation of Figure 1, only one of the battery cell stacks 120 is visible.

Each battery cell stack 120 comprises a plurality of battery cells 130. For reasons of better visibility, only some of the battery cells 130 are provided with a reference sign in Figure 1.

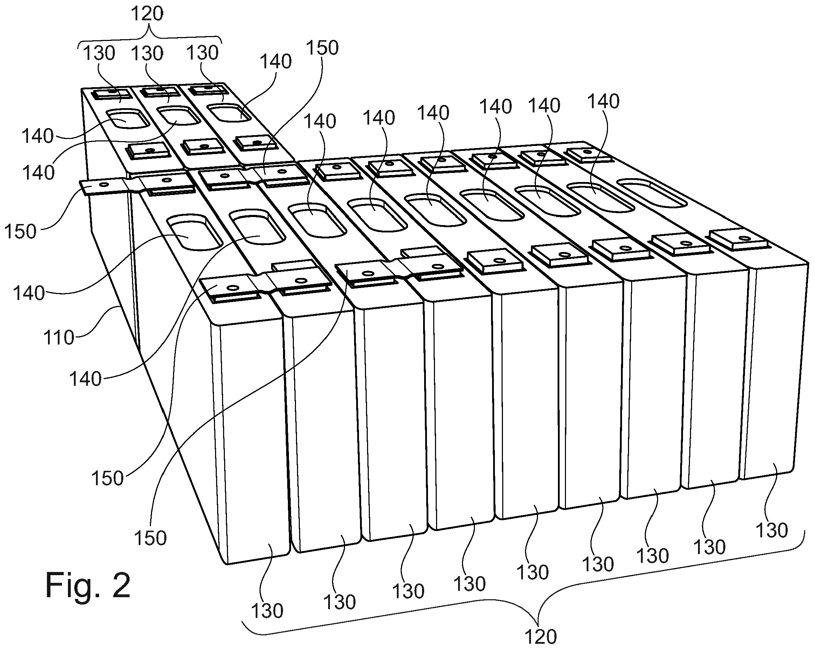

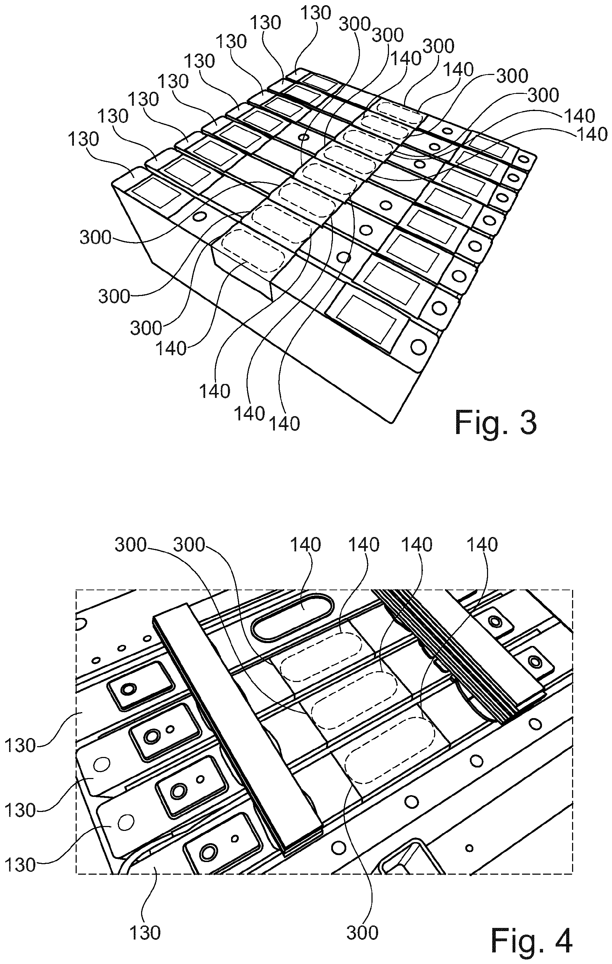

In Figure 2, two battery cell stacks 120 of the battery system 110 are shown in more detail. Also the individual battery cells 130 are shown in more detail. For reasons of better visibility, bus bars 150 for connecting individual battery cells 130 are illustratively shown for only some of the battery cells 130 in one battery cell stack 120. Figures 3 and 4 show further examples of battery cell stacks 120.

Each of the battery cell stacks 120 comprises a plurality of battery cells 130 which are arranged adjacent to one another along an arrangement direction. In other words, the battery cells 130 conjointly forming a battery cell stack 120 are arranged side-by-side along the arrangement direction.

In the present example, all battery cells 130 are so-called prismatic battery cells, i.e. the battery cells 130 are cuboid-shaped.

Moreover, the battery cells 130 conjointly forming a battery cell stack 120 are compressed along the arrangement direction when arranged in the housing of the battery system 110.

Each of the battery cells 130 has a battery cell body. Due to the cuboid shape, the battery cell body has a total of six sides.

A first side 510 is defined as the side of the battery cell body on which the electric terminals are provided.

A second side 520 is arranged adjacent to the first side 510, i.e. the first side and the second side share an edge of the battery cell body.

A third side 530 is also arranged adjacent to the first side 510. Thus, also the first side 510 and the third side 530 share an edge of the battery cell body.

Moreover, the second side 520 and the third side 530 are arranged at opposite edges of the first side 510.

The battery cell 130 also comprises a degassing valve 140 arranged on the first side 510 of the battery cell body 130.

In the present example, the degassing valve 140 is arranged between the electric terminals.

Further, the battery cell 130 comprises a cover element 300.

In the present example, the cover element 300 is a strip-shaped part comprising fiberglass. Thus, the cover element 300 may be described as a fiberglass tape.

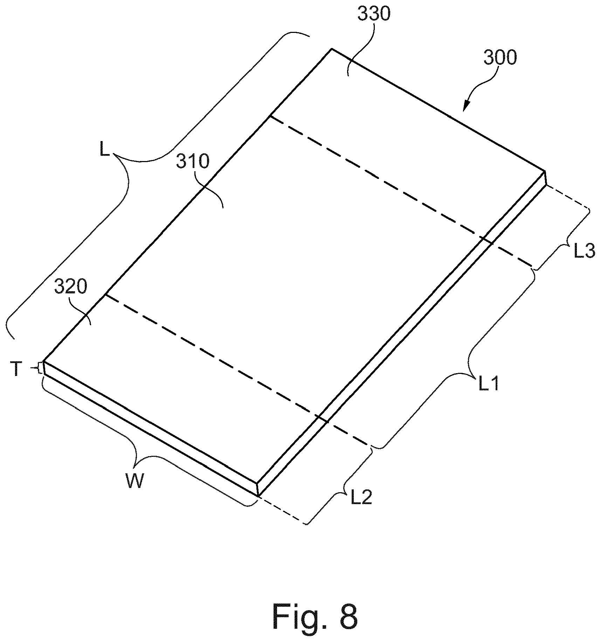

The cover element 300 has a length L, a width W and a thickness T (cf. Figure 8).

The cover element 300 is placed on the battery cell body such that it covers the degassing valve 140 and extends onto the second side 520 and the third side 530.

The width W of the cover element 300 equals a maximum width of the degassing valve 140, wherein the width of the degassing valve 140 is measured in the same direction as the width W of the cover element 300.

In the example shown in the Figures, the cover element 300 extends onto the second side 520 for approximately 25 mm. Moreover, the cover element 300 extends onto the third side 530 for approximately 25 mm.

The thickness T of the cover element is 0,5 mm.

Thus, the cover element 300 may comprise three sections 310, 320 and 330. Section 310 may be described as a middle section 310. Sections 320 and 330 may be described as end sections. The end sections are arranged on opposite sides of the middle section. The middle section has a length L1, the first end section has a length L2 and the second end section has a length L3.

In a mounted state of the battery cell 130, the middle section 310 contacts the first side 510, the end section 320 contacts the second side 520 and the end section 330 contacts the third side 530. Moreover, the cover element 300 is connected to the battery cell body, i.e. to the first side 510, to the second side 520 and to the third side 530 via an adhesive.

Thus, in each of the battery cells 130, the degassing valve 140 is individually protected, i.e. individually covered by a cover element 300. Additionally, the cover elements 300 may extend from the side comprising the degassing valve 140, i.e. the first side 510, onto the second side 520 and the third side 530. Thus, in an assembled state of the battery cell stack 120, the sections 320 and 330 of the cover element 300 are mechanically clamped between battery cell bodies of neighboring battery cells.

Thus, in a case in which one of the battery cells 130 undergoes a thermal event which causes the associated degassing valve 140 to open and let hot gasses flow out of the battery cell body of the battery cell 130, the cover element 300 of this battery cell 130 is deformed or eliminated such that the hot gases may leave the battery cell body. However, for the remaining battery cells 130, the cover elements 300 protect the associated degassing valves 140 from the hot gasses. This especially means that the degassing valves are protected from the thermal influence of the hot gases, i.e. from heat. Consequently, the degassing valves 140 of the remaining battery cells 130 may remain closed such that the thermal event does not affect the remaining battery cells 130.

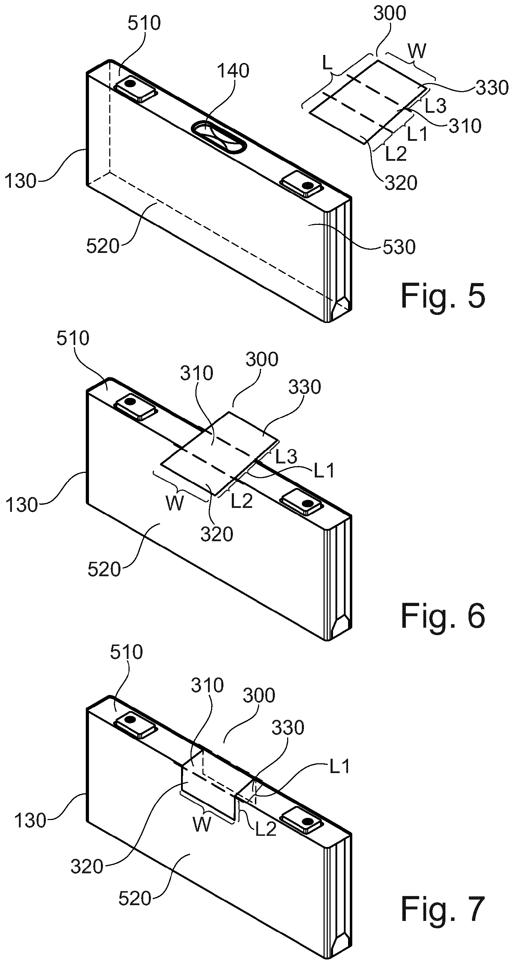

Figures 5 to 7 illustrate a method for manufacturing a battery cell 130.

The method comprises providing the battery cell body, and arranging the cover element 300 on the battery cell body such that the cover element 300 covers the degassing valve 140 and extends onto the second side 520 and onto the third side 530 as has been explained above.

In the present example, the cover element 300 is folded over the battery cell body and is attached thereto using adhesive.

A method for manufacturing a battery cell stack 120 comprises providing a plurality of such battery cells 130. Subsequently, the battery cells 130 are arranged adjacent to one another along an arrangement direction. This leads to the fact that each first end section 320 of one of the cover elements 300 contacts a neighboring battery cell 130. The same is true for each second end section 330 of one of the cover elements 300. Thus, each second end section 330 of the cover element 300 contacts a neighboring battery cell 130.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 100: vehicle
- 110: battery system
- 120: battery cell stack
- 130: battery cell
- 140: degassing valve
- 150: bus bar
- 300: cover element
- 510: first side of battery cell
- 520: second side of battery cell
- 530: third side of battery cell
- 310: middle section of cover element
- 320: end section of cover element
- 330: end section of cover element
- L: length of cover element
- L1: length of middle section
- L2: length of end section
- L3: length of end section
- W: width of cover element
- T: thickness of cover element

## Claims

1. A battery cell (130) for a traction battery of an electric vehicle (100), comprising:
a battery cell body having at least a first side (510) and a second side (520), wherein the second side (520) is arranged adjacent to the first side (510);
a degassing valve (140) arranged on the first side (510) of the battery cell body, and
a cover element (300) covering at least a portion of the degassing valve (140) and extending onto the second side (520).

2. The battery cell (130) according to claim 1, wherein the battery cell body further has a third side (530), wherein the second side (520) and the third side (530) are arranged adjacent to the first side (510) at opposite edges of the first side (510) and wherein the cover element (300) additionally extends onto the third side (530).

3. The battery cell (130) according to claim 1 or 2,
wherein the cover element (300) is connected to at least one of the first side (510), the second side (520) and the third side (530) via an adhesive.

4. The battery cell (130) according to any of claims 1 to 3,
wherein the cover element (300) extends onto at least one of the second side (520) and the third side (530) for at least 3mm and/or for at most 30mm.

5. The battery cell (130) according to any of claims 1 to 4, wherein in a direction perpendicular to the direction in which the cover element (300) extends onto the second side (520),
a width (W) of the cover element (300) at least equals a maximum width of the degassing valve (140) in this direction.

6. The battery cell (130) according to any of claims 1 to 5, wherein the cover element (300) comprises at least one of fiberglass, mica material and silicon rubber.

7. The battery cell (130) according to any of claims 1 to 6, wherein the cover element (300) has a thickness (T) in a range from 0.05mm to 1.0mm.

8. The battery (130) cell according to any of claims 1 to 7, wherein the cover element (300) is strip-shaped.

9. The battery cell (130) according to any of claims 1 to 8, wherein a mechanical connection interface is arranged on the first side (510), the mechanical connection interface configured to structurally connect the battery cell (130) with a structural element of the vehicle (100).

10. A battery cell stack (120) for an electric vehicle (100), comprising:
a plurality of battery cells arranged adjacent to one another along an arrangement direction,
wherein at least one battery cell (130) among the plurality of battery cells is a battery cell (130) according to any of claims 1 to 9,
wherein a portion (320) of the cover element (300) extending onto the second side (520) of the battery cell (130) according to any of claims 1 to 9 contacts a neighboring battery cell and/or wherein a portion (330) of the cover element (300) extending onto the third side (530) of the battery cell (130) according to any of claims 1 to 9 contacts a neighboring battery cell.

11. The battery cell stack (120) according to claim 10,
wherein the plurality of battery cells is compressed along a direction extending in parallel to the arrangement direction, wherein the portion (320; 330) of the cover element (300) contacting the neighboring battery cell is subject to a compression force.

12. A battery system (110) for an electric vehicle (100), comprising a battery cell stack (120) according to claim 10 or 11.

13. An electric vehicle (100) comprising a battery cell stack (120) according to claim 10 or 11 and/or a battery system (110) according to claim 12.

14. The electric vehicle (100) according to claim 13, wherein the battery cell stack (120) and/or the battery system (110) is a structural component of the vehicle (100).

15. A method for manufacturing a battery cell (130), wherein the battery cell (130) comprises a battery cell body having at least a first side (510) and a second side (520), wherein the second side (520) is arranged adjacent to the first side (510), and a degassing valve (140) arranged on the first side (510) of the battery cell body, the method comprising:
providing the battery cell body, and
arranging a cover element (300) on the cell body such that the cover element (300) covers at least a portion of the degassing valve (140) and extends onto the second side (520).

16. A method for manufacturing a battery cell stack (120) comprising a plurality of battery cells arranged adjacent to one another along an arrangement direction, the method comprising:
providing a plurality of battery cells, comprising at least one battery cell (130) according to any one of claims 1 to 9; and
arranging the plurality of battery cells adjacent to one another along the arrangement direction such that a portion (320) of the cover element (300) extending onto the second side (520) of the battery cell (130) according to any of claims 1 to 9 contacts a neighboring battery cell and/or such that a portion (330) of the cover element (300) extending onto the third side (530) of the battery cell (130) according to any of claims 1 to 9 contacts a neighboring battery cell.

## Amended claims

### Amended claims in accordance with Rule 137(2) EPC.

1. A battery cell (130) for a traction battery of an electric vehicle (100), comprising:
a battery cell body having at least a first side (510) and a second side (520), wherein the second side (520) is arranged adjacent to the first side (510);
a degassing valve (140) arranged on the first side (510) of the battery cell body, and
a cover element (300) covering at least a portion of the degassing valve (140) and extending onto the second side (520),
wherein the cover element (300) comprises at least one of fiberglass, mica material and silicon rubber.

2. The battery cell (130) according to claim 1, wherein the battery cell body further has a third side (530), wherein the second side (520) and the third side (530) are arranged adjacent to the first side (510) at opposite edges of the first side (510) and wherein the cover element (300) additionally extends onto the third side (530).

3. The battery cell (130) according to claim 1 or 2, wherein the cover element (300) is connected to at least one of the first side (510), the second side (520) and the third side (530) via an adhesive.

4. The battery cell (130) according to any of claims 1 to 3, wherein the cover element (300) extends onto at least one of the second side (520) and the third side (530) for at least 3mm and/or for at most 30mm.

5. The battery cell (130) according to any of claims 1 to 4, wherein in a direction perpendicular to the direction in which the cover element (300) extends onto the second side (520),
a width (W) of the cover element (300) at least equals a maximum width of the degassing valve (140) in this direction.

6. The battery cell (130) according to any of claims 1 to 5, wherein the cover element (300) has a thickness (T) in a range from 0.05mm to 1.0mm.

7. The battery (130) cell according to any of claims 1 to 6, wherein the cover element (300) is strip-shaped.

8. The battery cell (130) according to any of claims 1 to 7, wherein a mechanical connection interface is arranged on the first side (510), the mechanical connection interface configured to structurally connect the battery cell (130) with a structural element of the vehicle (100).

9. A battery cell stack (120) for an electric vehicle (100), comprising:
a plurality of battery cells arranged adjacent to one another along an arrangement direction,
wherein at least one battery cell (130) among the plurality of battery cells is a battery cell (130) according to any of claims 1 to 8,
wherein a portion (320) of the cover element (300) extending onto the second side (520) of the battery cell (130) according to any of claims 1 to 8 contacts a neighboring battery cell and/or wherein a portion (330) of the cover element (300) extending onto the third side (530) of the battery cell (130) according to any of claims 1 to 8 contacts a neighboring battery cell.

10. The battery cell stack (120) according to claim 9,
wherein the plurality of battery cells is compressed along a direction extending in parallel to the arrangement direction, wherein the portion (320; 330) of the cover element (300) contacting the neighboring battery cell is subject to a compression force.

11. A battery system (110) for an electric vehicle (100), comprising a battery cell stack (120) according to claim 9 or 10.

12. An electric vehicle (100) comprising a battery cell stack (120) according to claim 9 or 10 and/or a battery system (110) according to claim 11.

13. The electric vehicle (100) according to claim 12, wherein the battery cell stack (120) and/or the battery system (110) is a structural component of the vehicle (100).

14. A method for manufacturing a battery cell (130), wherein the battery cell (130) comprises a battery cell body having at least a first side (510) and a second side (520), wherein the second side (520) is arranged adjacent to the first side (510), and a degassing valve (140) arranged on the first side (510) of the battery cell body, the method comprising:
providing the battery cell body, and
arranging a cover element (300) on the cell body such that the cover element (300) covers at least a portion of the degassing valve (140) and extends onto the second side (520),
wherein the cover element (300) comprises at least one of fiberglass, mica material and silicon rubber.

15. A method for manufacturing a battery cell stack (120) comprising a plurality of battery cells arranged adjacent to one another along an arrangement direction, the method comprising:
providing a plurality of battery cells, comprising at least one battery cell (130) according to any one of claims 1 to 8; and
arranging the plurality of battery cells adjacent to one another along the arrangement direction such that a portion (320) of the cover element (300) extending onto the second side (520) of the battery cell (130) according to any of claims 1 to 8 contacts a neighboring battery cell and/or such that a portion (330) of the cover element (300) extending onto the third side (530) of the battery cell (130) according to any of claims 1 to 8 contacts a neighboring battery cell.
